Europäisches Patentamt

**European Patent Office**

**Office européen des brevets**

(11) Numéro de publication: **0 094 879**

**A1**

# (12) DEMANDE DE BREVET EUROPEEN

(21) Numéro de dépôt: **83400960.7**

(22) Date de dépôt: **11.05.83**

(51) Int. Cl.³: **B 64 D 11/06**
**B 60 P 7/08**

(30) Priorité: **18.05.82 FR 8208666**

(43) Date de publication de la demande:
**23.11.83 Bulletin 83/47**

(84) Etats contractants désignés:
**AT BE CH DE GB IT LI LU NL SE**

(71) Demandeur: **TISSMETAL LIONEL-DUPONT**
**138 boulevard de la Croix-Rousse**
**F-69001 Lyon(FR)**

(72) Inventeur: **Martin, Gérard**
**19, Allée des Charmes Résidence Préfleury**
**F-91310 Longpont-sur-Orge.(FR)**

(74) Mandataire: **Bruder, Michel**
**10 rue de la Pépinière**
**F-75008 Paris(FR)**

(54) **Dispositif de protection et de couverture d'un rail de fixation des sièges d'un avion commercial équipé d'un dispositif de variation automatique du pas des sièges.**

(57) La présente invention concerne un dispositif de protection et de couverture d'un rail de fixation des sièges d'un avion commercial équipé d'un dispositif de variation automatique du pas des sièges.

Ce dispositif est caractérisé en ce qu'il comporte un couvre-rail (11) supérieur longiforme, de largeur supérieure à celle du rail (3), recouvrant totalement le rail et en contact, par ses bords longitudinaux, avec le tapis de sol, ce couvre-rail (11) étant solidaire de la latte de liaison (9) entre les sièges, et des lames horizontales (14,15) solidaires de chaque socle (8) d'un pied, s'étendant longitudinalement sur une certaine longueur sous le couvre-rail (11), entre celui-ci et la latte de liaison (9), pour former, avec ce couvre-rail, un ensemble télescopique et recouvrir ainsi le totalité du rail (3) entre le pied arrière d'un siège et le pied avant du siège précédent.

EP 0 094 879 A1

./...

Fig. 2

La présente invention concerne un dispositif de protection et de couverture d'un rail de fixation des sièges d'un avion commercial équipé d'un dispositif de variation automatique du pas des sièges.

Il est d'usage, dans les installations conventionnelles des sièges à bord d'un avion commercial, de recouvrir les rails du plancher sur lesquels sont fixés les sièges, par des caches constitués par des pièces longiformes, présentant une section droite adaptée au profil intérieur des rails de manière à pouvoir s'y accrocher et dont les dimensions en longueur dépendent de la distance laissée libre par l'implantation des sièges, entre le pied arrière d'un siège et le pied avant du siège suivant. Il est également connu, ainsi qu'il est décrit dans la demande de brevet français N°79 14485, de faire varier le "pas" des sièges, autrement dit la distance entre ceux-ci, au moyen d'un dispositif motorisé automatique actionnant un jeu de lattes de liaison entre les pieds avant d'un siège et les pieds arrière du siège précédent. Il est donc évident que dans le cas où un tel dispositif de variation du pas est prévu dans un avion commercial, les couvre-rails conventionnels, de longueurs prédéterminées, présentent l'inconvénient de devoir être remplacés par d'autres lors de chaque changement de pas, de manière à couvrir les espaces laissés libres sur les rails par la nouvelle configuration des sièges.

La présente invention a pour but de remédier à cet inconvénient par des moyens très simples s'adaptant automatiquement à la longueur demandée par une nouvelle configuration des sièges, sans qu'il soit nécessaire d'intervenir manuellement pour les ajuster.

A cet effet, ce dispositif de protection et de couverture d'un rail de fixation des sièges d'un avion commercial équipé d'un dispositif de variation automatique du pas des sièges, ce rail présentant, dans sa surface supérieure, une gorge dans laquelle s'agrippent des organes d'arrimage solidaires des pieds et empêchant leur détachement tout en permettant leur coulissement longitudinal, les pieds des sièges étant solidaires de socles reliés par des lattes de liaison,est caractérisé en ce qu'il comporte un couvre-rail supérieur longiforme, de largeur supérieure à celle du rail, recouvrant totalement le rail et en contact, par ses bords longitudinaux, avec le tapis de sol, ce couvre-rail étant solidaire de la latte de liaison entre les sièges, et des lames horizontales solidaires de chaque socle d'un pied, s'étendant longitudinalement sur une certaine longueur sous le couvre-rail, entre celui-ci et la latte de liaison, pour former, avec ce couvre-rail, un ensemble télescopique et recouvrir ainsi la totalité du rail entre le pied arrière d'un siège et le pied avant du siège précédent.

Le dispositif suivant l'invention assure une protection du rail à l'encontre de la pénétration de corps étrangers dans le rail, corps qui pourraient entraver le fonctionnement normal du dispositif motorisé de variation du pas.

On décrira ci-après, à titre d'exemple non limitatif, une forme d'exécution de la présente invention, en référence au dessin annexé sur lequel :

La figure 1 est une vue en perspective d'une partie du dispositif de protection et de couverture d'un rail suivant l'invention, de part et d'autre d'un socle de fixation d'un pied arrière d'un siège.

La figure 2 est une vue en coupe axiale et verticale du dispositif de protection et de couverture entre les pieds de deux sièges.

La figure 3 est une vue en plan du dispositif.

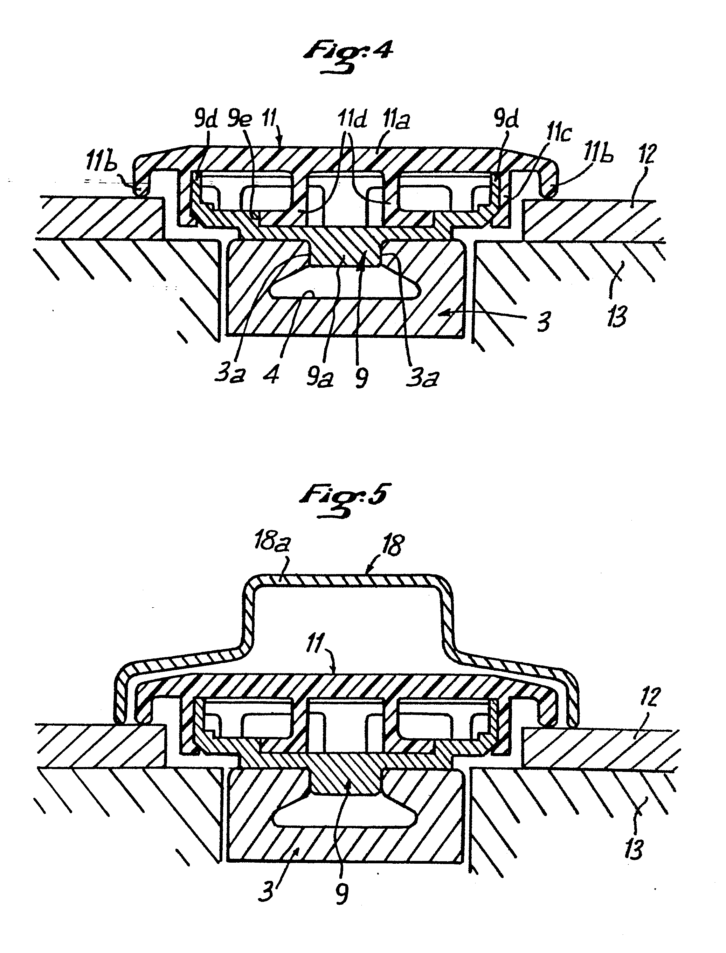

La figure 4 est une vue en coupe verticale et transversale faite suivant la ligne IV-IV de la figure 2.

La figure 5 est une vue en coupe verticale et transversale faite à l'endroit de la tringle de liaison entre les deux pieds d'un même siège.

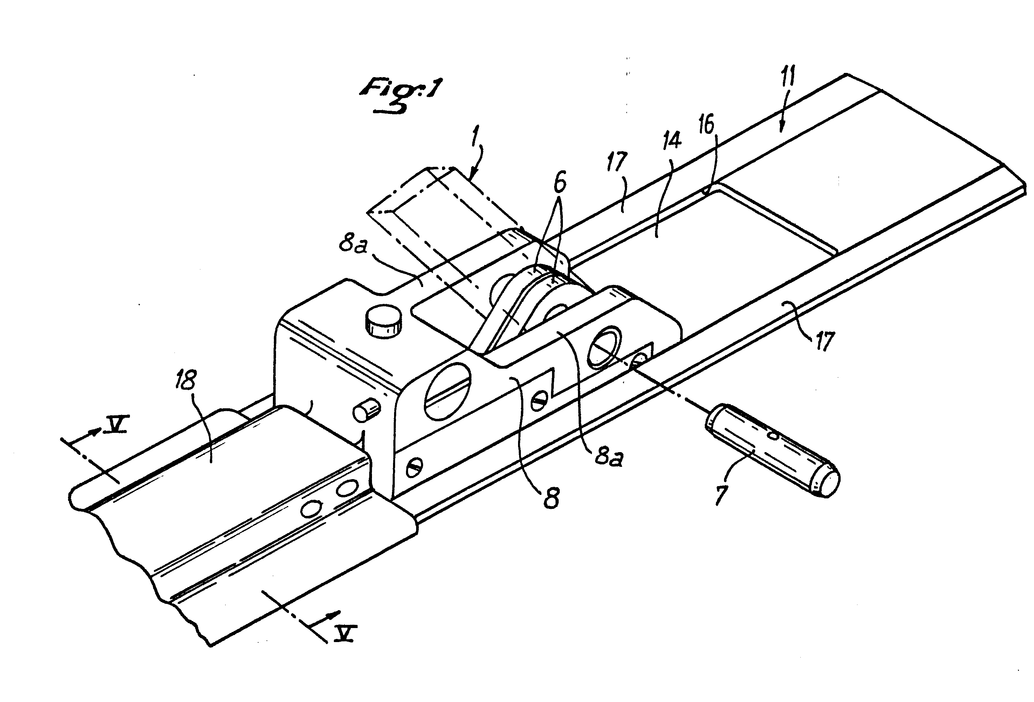

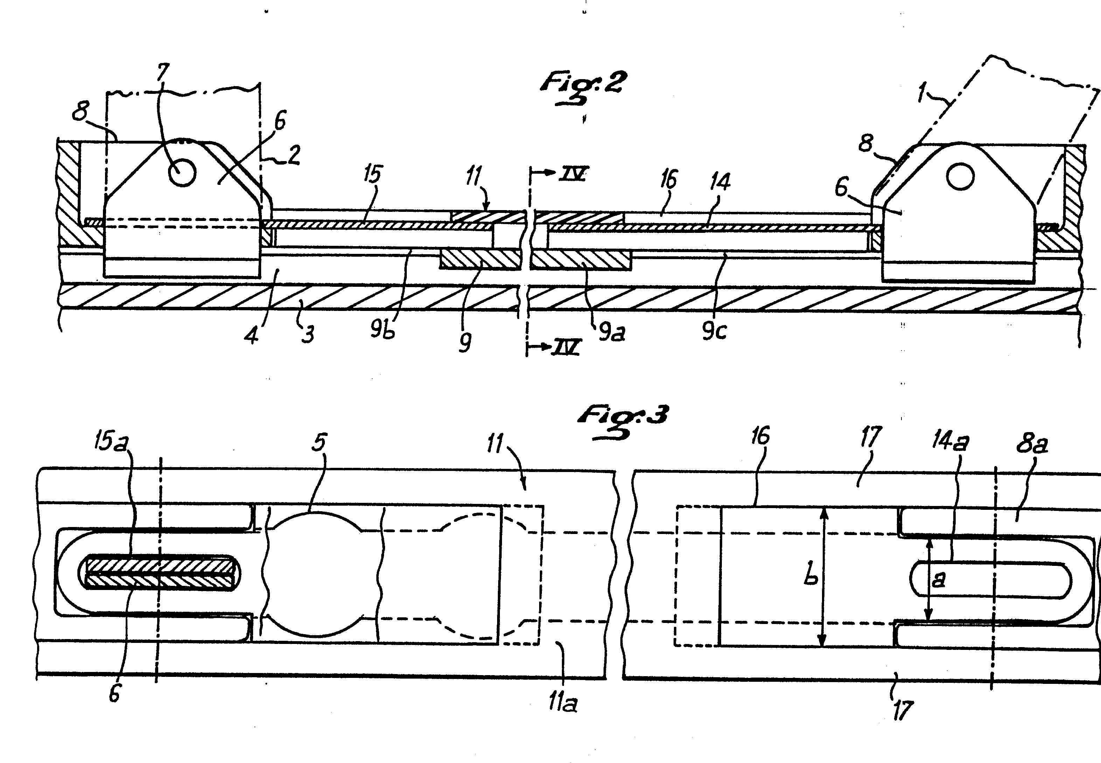

Le dispositif suivant l'invention est associé à un dispositif permettant de faire varier automatiquement le pas des sièges d'un avion commercial. Sur les figures 1 et 2 ces sièges ne sont représentés que par un pied arrière 1 et un pied avant 2, ces deux pieds étant illustrés simplement en trait mixte. Tous les sièges d'un avion commercial sont fixés par leurs pieds 1, 2, à des rails longitudineux 3 incorporés dans le plancher de la carlingue et présentant couramment, à leur partie supérieure, une gorge longitudinale 4 à section droite en queue d'aronde. A intervalles réguliers, des trous verticaux 5 sont percés dans les lèvres intérieures et supérieures 3a du rail 3 qui se font face et délimitent la gorge 4. L'arrimage des pieds des sièges, qu'il s'agisse des pieds avant ou arrière, est réalisé au moyen de deux crochets 6 à section droite en forme de L, chacun de ces crochets 6 comportant une aile horizontale inférieure, de petite largeur, destinée à s'engager dans la gorge 4, et une aile verticale de grande hauteur. Les deux crochets 6 de chaque paire sont rendus solidaires du pied arrière 1 ou avant 2 associé, au moyen d'un axe horizontal et transversal 7 traversant des trous coaxiaux percés dans les deux crochets 6 et dans les ailes latérales et verticales 8a d'un socle 8 portant un organe de verrouillage s'engageant dans les divers trous 5 du rail 3.

La liaison entre le pied arrière 1 d'un siège antérieur et le pied avant 2 d'un siège postérieur est réalisée au moyen d'une latte de liaison 9 qui présente, de part et d'autre d'une partie médiane 9a de forte épaisseur, deux boutonnières longitudinales 9b et 9c qui sont nécessaires pour permettre, d'une part, le déverrouillage des sièges et, d'autre part, la variation du pas entre les sièges. La partie médiane 9a de la latte de liaison 9 est engagée entre les deux lèvres 3a du rail 3 et coulisse longitudinalement dans celui-ci, en assurant ainsi le guidage longitudinal. Tous les éléments qui viennent d'être décrits font partie du dispositif de variation automatique du pas entre les sièges qui est décrit en détail dans la demande de brevet français précitée N°79 14485 .

Le dispositif de protection du rail 3 entre le pied arrière 1 d'un siège antérieur et le pied avant 2 d'un siège postérieur comprend plusieurs éléments superposés formant un ensemble télescopique. Ce dispositif comporte un couvre- rail supérieur 11 qui est constitué par une pièce longiligne, réalisée par exemple en matière plastique, par extrusion, et qui présente une partie plane supérieure, horizontale, 11a dont la largeur est supérieure à celle de la latte de liaison 9. La partie plane supérieure horizontale 11a se termine, le long de ses deux côtés longitudinaux, par deux lèvres 11b repliées vers le bas et dont les extrémités inférieures glissent sur le tapis de sol 12 disposé sur le plancher 13 de l'avion et qui est interrompu dans la zone où se trouve le rail de fixation 3. Le couvre-rail 11 est rendu solidaire de la latte de liaison 9, par tous moyens appropriés. Par exemple le couvre-rail 11 peut être assemblé avec la latte de liaison 9 par simple encliquetage. A cet effet, il présente deux nervures latérales longitudinales 11c, s'étendant vers le bas et formant des crochets à leurs extrémités, lesquels s'agrippent sur deux lèvres latérales 9d, s'étendant vers le haut, faisant partie de la latte de liaison 9. L'assemblage des deux pièces 9 et 11 peut être complété par la prévision, dans la partie centrale du couvre-rail 11, de deux autres nervures longitudinales 11d, s'étendant vers le bas, en forme d'équerres, et dont les branches horizontales, s'étendant vers l'extérieur, viennent en butée contre des épaulements longitudinaux internes 9e de la latte de liaison 9.

Le dispositif de protection comprend par ailleurs deux lames horizontales 14 et 15 qui s'étendent longitudinalement et sont solidaires, à l'une de leurs extrémités, des socles 8 des pieds arrière 1 et avant 2. La partie extrême de chacune des lames 14, 15 qui est liée au socle 8, présente une largeur réduite a de manière à pouvoir s'engager entre les ailes latérales et verticales 8a du socle 8. En outre, elle est percée d'une lumière longitudinale respective 14a, 15a pour permettre le passage des ailes verticales des organes d'arrimage 6. Le reste de chacune des lames 14, 15 a une largeur supérieure b qui est égale à celle d'une entaille 16 qui est ménagée longitudinalement dans la partie supérieure horizontale 11a, à ses deux extrémités longitudinales, du couvre-rail 11. Chaque entaille 16 délimite ainsi, dans le couvre-rail 11, deux languettes latérales 17 qui s'étendent le long des ailes latérales et verticales 8a, à l'extérieur de ces ailes, pour s'engager sous les pieds des sièges.

Sous chaque siège est disposée une tringle de liaison longitudinale 18 qui s'étend entre les socles 8 des pieds arrière 1 et avant 2 du siège et qui est fixée à ces socles.

On voit d'après la description qui précède que quelle que soit la valeur du pas, c'est-à-dire de la distance entre les sièges, le rail inférieur 3 est protégé à l'encontre de tout corps étranger pouvant y être introduit, du fait qu'il est totalement recouvert par l'ensemble télescopique constitué par le couvre-rail supérieur 11 et les lames 14, 15. La partie extrême libre de chacune des lames 14, 15 est engagée quelque peu dans la partie centrale du couvre-rail 11, ce qui assure ainsi la continuité de la protection. Si on réduit le pas entre les sièges, les lames 14, 15 pénètrent alors davantage à l'intérieur du couvre-rail 11 et au contraire elles y pénètrent un peu moins dans le cas d'une augmentation du pas entre les sièges.

Sous un même siège, la protection du rail 3 est assurée par la tringle de liaison 18 qui s'étend entre les deux socles 8 et qui recouvre en permanence le rail 3. Cette tringle de liaison peut avoir n'importe quelle forme appropriée : elle peut notamment comporter une partie centrale 18a surélevée, à section droite en forme de U inversé, laquelle est prolongée par des lèvres latérales s'étendant jusqu'au tapis de sol 12 et recouvrant les ailes longitudinales extrêmes 17 faisant partie du couvre-rail 11.

REVENDICATIONS

1- Dispositif de protection et de couverture d'un rail de fixation des sièges d'un avion commercial équipé d'un dispositif de variation automatique du pas des sièges, ce rail présentant, dans sa surface supérieure, une gorge dans laquelle s'agrippent des organes d'arrimage solidaires des pieds et empêchant leur détachement tout en permettant leur coulissement longitudinal, les pieds des sièges étant solidaires de socles reliés par des lattes de liaison,caractérisé en ce qu'il comporte un couvre-rail (11) supérieur longiforme, de largeur supérieure à celle du rail (3), recouvrant totalement le rail et en contact, par ses bords longitudinaux, avec le tapis de sol, ce couvre-rail(11) étant solidaire de la latte de liaison (9) entre les sièges, et des lames horizontales (14,15) solidaires de chaque socle(8) d'un pied, s'étendant longitudinalement sur une certaine longueur sous le couvre-rail (11), entre celui-ci et la latte de liaison (9), pour former, avec ce couvre-rail, un ensemble télescopique et recouvrir ainsi la totalité du rail (3)entre le pied arrière d'un siège et le pied avant du siège précédent.

2.- Dispositif suivant la revendication 1, caractérisé en ce que chaque lame (14, 15) présente, dans sa partie extrême, une boutonnière longitudinale (14a, 15a) permettant le passage à travers elle des organes d'arrimage (6).

3.- Dispositif suivant la revendication 2, caractérisé en ce que la partie extrême de chaque lame (14, 15), de largeur (a) plus petite que la largeur (b) du reste de la lame, s'engage entre deux ailes latérales et verticales (8a) du socle (8) lié au pied (1) du siège.

4.- Dispositif suivant la revendication 3, caractérisé en ce que le couvre-rail (11) présente, à ses deux extrémités, une entaille longitudinale rectangulaire (16) délimitant deux ailes longitudinales latérales (17) s'étendant le long des deux ailes latérales et verticales (8a) du socle (8), à l'extérieur de celles-ci.

5.- Dispositif suivant la revendication 4, caractérisé en ce que les deux ailes longitudinales et latérales (17) du couvre-rail (11) sont engagées sous les parties latérales d'une tringle de liaison (18) s'étendant entre les deux socles (8) fixés aux pieds d'un même siège, cette tringle (18) qui recouvre le rail (3) entre ces pieds, étant fixée aux socles (8).

6.- Dispositif suivant l'une quelconque des revendications 1 à 5, caractérisé en ce que la liaison entre le couvre-rail (11) et la latte de liaison (9) est réalisée par encliquetage.

7.- Dispositif suivant la revendication 6, caractérisé en ce que le couvre-rail (11) comprend une partie supérieure horizontale (11a) se terminant, le long de ses deux côtés longitudinaux, par deux lèvres (11b) s'étendant vers le bas, le couvre-rail (11) comprenant en outre deux nervures verticales et longitudinales (11c) s'étendant vers le bas et formant des crochets à leurs extrémités, lesquels s'agrippent sur deux lèvres latérales (9d), s'étendant vers le haut, faisant partie de la latte de liaison (9).

8.- Dispositif suivant la revendication 7, caractérisé en ce que le couvre-rail (11) comporte en outre, dans sa partie centrale, deux nervures longitudinales additionnelles (11 d), s'étendant vers le bas, en forme d'équerre et dont les banches horizontales, s'étendant vers l'extérieur, viennent en butée contre des épaulements longitudinaux internes (9e) de la latte de liaison (9).

Fig.1

## Fig. 2

## Fig. 3

3/3

0094879

Fig. 4

Fig. 5

## 0094879

**Numéro de la demande**

**EP 83 40 0960**

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 381 927 (STAMATES) <br> * En entier * | 1 | B 64 D 11/06 <br> B 60 P 7/08 |
| | ----- | | |

| DOMAINES TECHNIQUES RECHERCHES (Int. Cl. ³) |
|---|
| B 64 C <br> B 64 D <br> B 60 N <br> B 60 P |

Le présent rapport de recherche a été établi pour toutes les revendications

| Lieu de la recherche <br> LA HAYE | Date d'achèvement de la recherche <br> 25-08-1983 | Examinateur <br> ZERI A. |
|---|---|---|